# EUROPEAN PATENT SPECIFICATION

(11) **EP 4 668 575 B1**
(45) Date of publication and mention of the grant of the patent: **18.11.2026**
(21) Application number: 24382653.4
(22) Date of filing: 17.06.2024
(51) Int. Cl.: H02S 50/00

(54) **METHOD FOR POSITIONING A SINGLE-AXIS SOLAR TRACKER DURING OVERCAST PERIODS**
VERFAHREN ZUR POSITIONIERUNG EINES EINACHSIGEN SONNENFOLGERS WÄHREND ÜBERSENDUNGSPERIODEN
PROCÉDÉ DE POSITIONNEMENT D'UN SUIVEUR SOLAIRE MONOAXIAL PENDANT DES PÉRIODES DE SURDIFFUSION

(43) Date of publication of application: 24.12.2025
(73) Proprietor: P4Q Electronics, S.L., 48810 Alonsotegi (ES)
(72) Inventor: VEGAS DIEZ, David, 39880 Valle de Villaverde (ES); GONZALEZ FUENTES, Fernando Jose, 48640 Berango (ES)
(74) Representative: Galbaian S.Coop.

(56) References cited:
- US-A1- 2012 191 351
- US-A1- 2022 083 079
- TSCHOPP DANIEL ET AL: "Measurement and modeling of diffuse irradiance masking on tilted planes for solar engineering applications", SOLAR ENERGY, ELSEVIER, AMSTERDAM, NL, vol. 231, 4 December 2021 (2021-12-04), pages 365 - 378, XP086916949, ISSN: 0038-092X, [retrieved on 20211204], DOI: 10.1016/J.SOLENER.2021.10.083

## Description

### TECHNICAL FIELD

The present invention relates to a method for positioning a single-axis solar tracker during overcast periods to maximize the solar irradiance received.

### PRIOR ART

Solar irradiance received by photovoltaic panels is converted into electric energy. The electric energy generated by photovoltaic panels is proportional to the solar energy that falls on the active surface of the panels, the more solar irradiance, the more energy is generated. The document US2022/083079A is a relevant prior art.

Solar trackers allow tracking the sun to maximize the solar irradiance received onto the photovoltaic panels. Among solar trackers, single-axis solar trackers are particularly efficient. A single-axis solar tracker comprise a single horizontal axis operatively coupled to a drive mechanism and a plurality of photovoltaic panels arranged onto the single horizontal axis. The single horizontal axis is rotatable through various tracking angles for positioning the photovoltaic panels at different normal tracking positions to follow the sun during the day between rise and descent of the sun from east to west.

Tracking the sun has a major drawback by offering a yield deficit under certain weather conditions, and in particular during overcast periods which are at the origin of a diffuse solar radiation. The diffuse solar radiation arises when the direct solar radiation is dispersed in the clouds and the atmospheric particles resulting in diffraction of light by the clouds and by the various molecules in suspension in the atmosphere. In such conditions, is known that is better to arrange the photovoltaic panels horizontally to the ground than positioning the photovoltaic panels at normal tracking positions to track the sun.

To decide whether it is better to track the sun during overcast periods, it is known to use decision systems that use information from several sensors measuring irradiance at different locations of the solar tracker site, and/or complex weather forecasting systems.

EP3940951A1 shows a method for controlling a single-axis solar tracker which involves measuring solar irradiance on a tracking plane of a panel of the single-axis solar tracker and also measuring solar irradiance on a horizontal plane by solar plant sensors deployed along a solar plant, and comparing the irradiance levels for bringing the panels to a 0° position when there is higher irradiance level on the horizontal plane than in the tracking plane.

US20180152134A1 shows a method for controlling the orientation of a single-axis solar tracker based on the processing of images obtained with a sky camera to predict the evolution of the weather.

### DISCLOSURE OF THE INVENTION

The object of the invention is to provide a method for positioning a single-axis solar tracker during overcast periods, as defined in the claims.

The invention relates to a method for positioning a single-axis solar tracker during overcast periods, wherein the solar tracker includes a single horizontal axis operatively coupled to a drive mechanism and a plurality of photovoltaic panels arranged onto the single horizontal axis, the single horizontal axis being rotatable through various tracking angles for positioning the photovoltaic panels at different normal tracking positions to follow the sun during the day between rise and descent of the sun from east to west;

The method comprises:
- using a radiation detecting sensor in the vicinity of the single-axis solar tracker to measure values of global horizontal irradiance *GHI* of the sun in the location of the single-axis solar tracker during a time interval;
- determining, based on the values of global horizontal irradiance *GHI* measured with the radiation detecting sensor, an estimation of a diffuse horizontal irradiance *DHIₐₚₓ* representative of diffuse irradiance incident on the location of the solar tracker during said time interval;
- determining, based on the values of global horizontal irradiance *GHI* measured with the radiation detecting sensor, an estimation of a global tilted irradiance *GTIₐₚₓ* representative of global irradiance incident onto the photovoltaic panels during said time interval;
- comparing the diffuse horizontal irradiance *DHIₐₚₓ* with the global tilted irradiance *GTIₐₚₓ;* and
- obtaining a maximum tracking angle based on said comparation, such that when the diffuse horizontal irradiance *DHIₐₚₓ* is bigger than the global tilted irradiance *GTIₐₚₓ,* the rotation of the single horizontal axis is limited to the maximum tracking angle.

The proposed method avoids energy production loss caused by tracking the sun during overcast periods when diffuse irradiance is predominant, added to the waste of energy in unnecessary movements of the panels. In addition, by reducing the movements, the life of the solar tracker may be extended.

Moreover, the method requires minimal resources for on-site application since the decision to track or not the sun is established by the information provided by a radiation detecting sensor which is a simple sensor that only measures values of global horizontal irradiance *GHI* of the sun in the location of the solar tracker, and the diffuse horizontal irradiance *DHIₐₚₓ* and also the a global tilted irradiance *GTIₐₚₓ* are estimated from said simple measures of global horizontal irradiance *GHI.* The method does not require complex calculations of data provided by various sensors arranged on the trackers neither sensors arrange at different locations of the solar plant, nor does it require complex weather forecasting systems.

These and other advantages and features of the invention will become apparent in view of the figures and the detailed description of the invention.

### DESCRIPTION OF THE DRAWINGS

Figure 1 shows a scheme of the solar irradiance occurring at a solar tracker site.
Figures 2a and 2b shows an example of a single-axis solar tracker.
Figure 3 shows a flowchart of an example method for positioning a single-axis solar tracker during overcast periods according to the invention.
Figure 4 shows a block diagram of a system for carrying out the method.
Figure 5a shows a graph of the tracking angle taken by the photovoltaic panels of the single-axis solar tracker during a sunny day with cloudy periods.
Figure 5b shows a graph of the tracking angle taken by the photovoltaic panels of the single-axis solar tracker during a cloudy day.
Figure 6a shows a set of single-axis solar trackers with the photovoltaic panels at normal tracking positions pointing to the sun, while Figure 6b shows said photovoltaic panels during an overcast period not pointing to the sun.

### DETAILED DISCLOSURE OF THE INVENTION

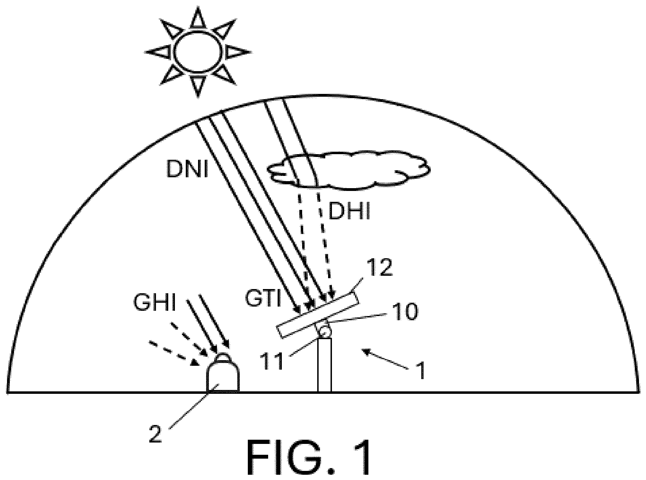

Figure 1 shows a scheme of the solar irradiance occurring at a solar tracker site showing a global horizontal irradiance *GHI,* direct (or beam) normal irradiance *DNI,* diffuse horizontal irradiance *DHI* and global tilted irradiance *GTI.*

Global horizontal irradiance *GHI* is the total amount of radiation received from the sky by a surface horizontal to the ground. Global horizontal irradiance *GHI* includes direct normal irradiance *DNI* and diffuse horizontal irradiance *DHI.* Direct normal irradiance *DNI* is solar radiation that comes in a straight line from the sun at the current position of the sun in the sky and diffuse horizontal irradiance *DHI* is solar radiation that does not arrive on a direct path from the sun but has been scattered by molecules and particles in the atmosphere (particularly clouds) and comes from all directions.

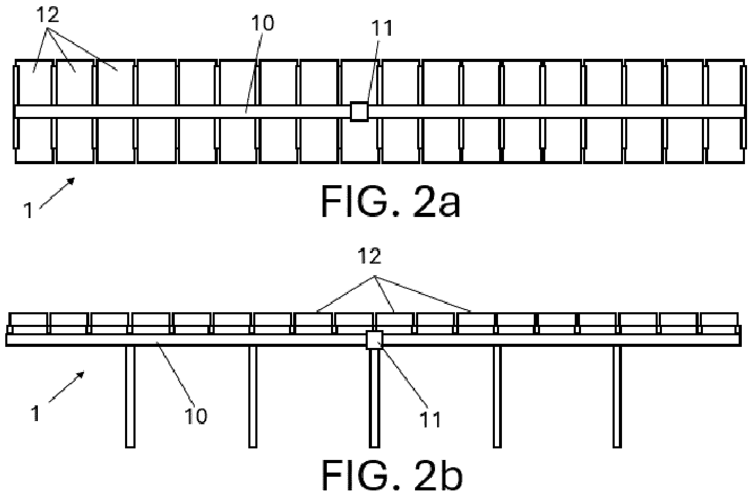

Figure 1 and also Figures 2a and 2b show an example of a single-axis solar tracker 1 having a single horizontal axis 10 operatively coupled to a drive mechanism 11 and a plurality of photovoltaic panels 12 arranged onto the single horizontal axis 10. The drive mechanism 11 may comprises a motor for rotation the single horizontal axis 10. The single horizontal axis 10 may be composed by sections operatively coupled together.

As can be observed in Figure 1, global tilted irradiance *GTI* is the total amount of radiation received onto the active surface of the photovoltaic panels 12 of the single-axis solar tracker 1.

The single horizontal axis 10 may be rotated through various tracking angles *βₙ* for positioning the photovoltaic panels 12 at different normal tracking positions to follow the sun during the day between rise and descent of the sun from east to west. For example, the single-axis solar tracker 1 may include a tracking algorithm having a plurality of normal tracking positions according to the tracking angles *βₙ* for following the sun during the day.

For example, the tracking algorithm may calculate the tracking angle *βₙ* based on data such as a GPS position of the solar tracker 1 and UTC date and time.

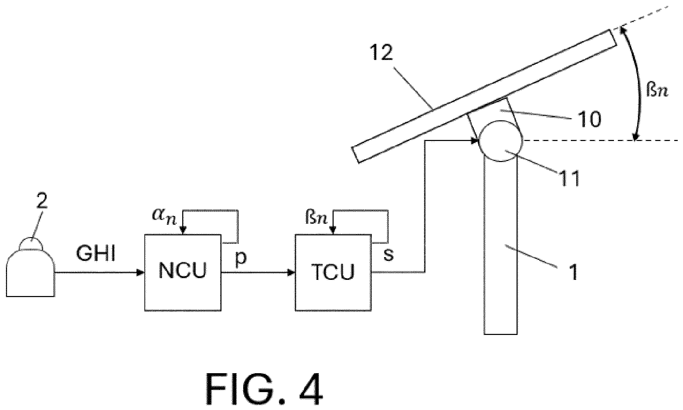

A tracking angle *βₙ* is an angle established with respect to an horizonal plane parallel to the ground allowing to arrange the active surface of the photovoltaic panels 12 normal to the solar solar radiation that comes in a straight line from the sun (see Figure 4). For example, the drive mechanism 11 may rotate the single horizontal axis 10 throughout the day using said tracking angles *βₙ* of the tracking algorithm that are pre-determined angles according to the sun position to maximize the direct irradiance received onto the photovoltaic panels 12.

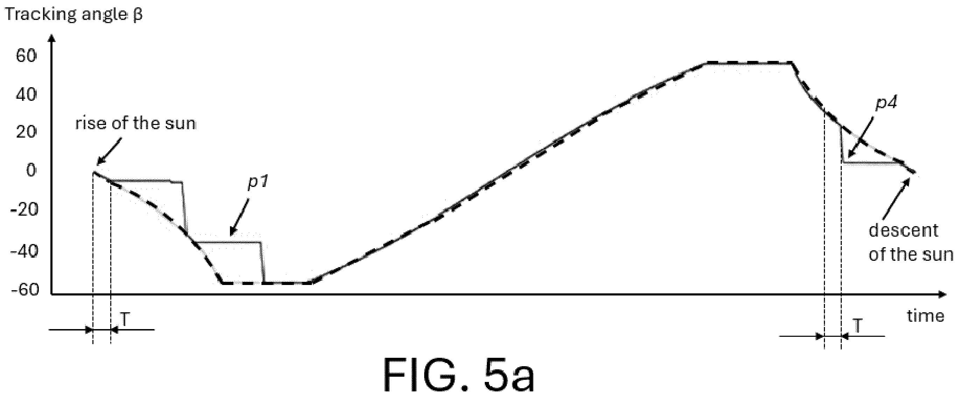

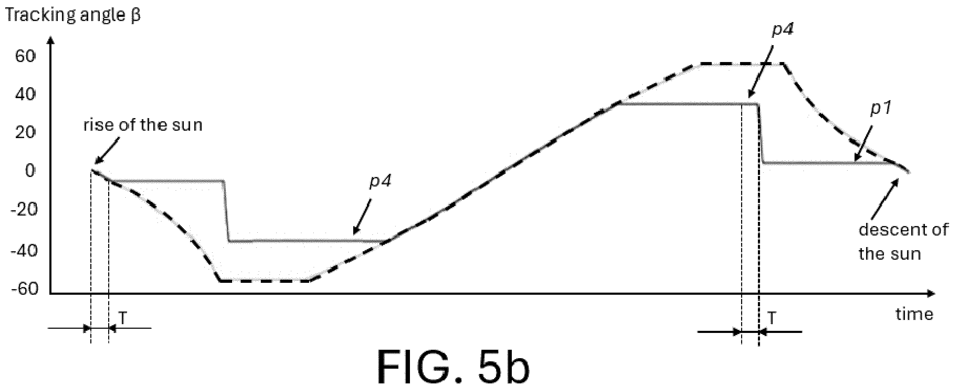

The photovoltaic panels 12 may rotate at least 45 degrees from horizontal toward the East and at least 45 degrees from horizontal toward the West, although other angles are possible depending on the location of the solar tracker. Preferably, as it can be observed in Figures 5a and 5b, the photovoltaic panels 12 may rotate between 60 to -60 degrees.

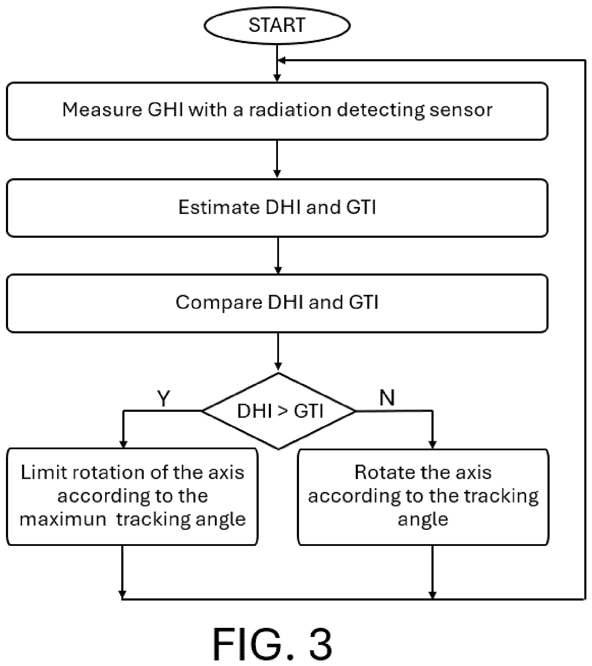

As can be observed in the flowchart of Figure 3, the method for positioning a single-axis solar tracker 1 during overcast periods comprises:
- using a radiation detecting sensor 2 in the vicinity of the single-axis solar tracker 1 to measure values of global horizontal irradiance *GHI* of the sun in the location of the single-axis solar tracker 1 during a time interval T;
- determining, based on the values of global horizontal irradiance *GHI* measured with the radiation detecting sensor 2, an estimation of a diffuse horizontal irradiance *DHIₐₚₓ* representative of diffuse irradiance incident on the location of the solar tracker 1 during said time interval T;
- determining, based on the values of global horizontal irradiance *GHI* measured with the radiation detecting sensor 2, an estimation of a global tilted irradiance *GTIₐₚₓ* representative of global irradiance incident onto the photovoltaic panels 12 during said time interval T;
- comparing the diffuse horizontal irradiance *DHIₐₚₓ* with the global tilted irradiance *GTIₐₚₓ;* and
- obtaining a maximum tracking angle p based on said comparation, such that when the diffuse horizontal irradiance *DHIₐₚₓ* is bigger than the global tilted irradiance *GTIₐₚₓ,* the rotation of the single horizontal axis 10 is limited to the maximum tracking angle p.

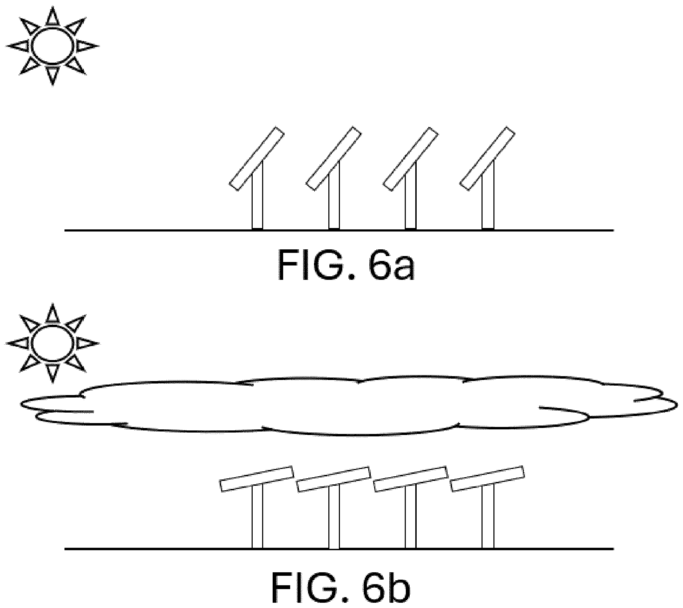

According to this, the solar irradiance received onto the photovoltaic panels 12 is maximized, since when global tilted irradiance *GTIₐₚₓ* is predominant, the single horizontal axis 10 is rotate according to the tracking angles *βₙ* for positioning the photovoltaic panels 12 at normal tracking positions pointing the sun (see Figure 6a) and when diffuse horizontal irradiance *DHIₐₚₓ* is predominant, the rotation of the single horizontal axis 10 is limited to arrange the panels 12 in a not bigger angle than the tracking angles *βₙ* (see Figure 6b).

Estimation of the global tilted irradiance *GTIₐₚₓ* and the diffuse horizontal irradiance *DHIₐₚₓ* is determined using simple mathematical expressions that do not require large resources for their calculation, so that they can be implemented in a device with low computational capacity, like for example a microcontroller, thus the calculation can be implemented locally without requiring to connect to external computing devices.

The estimation of the global tilted irradiance *GTIₐₚₓ* is determined based on the following expression: ${GTI}_{apx} = {G}_{m} ∗ \frac{1 - {{K}_{1}}^{- \left({G}_{m}∗{k}_{2}\right)}}{cos \left({α}_{m}\right)}$ wherein:
*Gₘ* is the average of the values of global horizontal irradiance *GHI* measured during said time interval T;
*αₘ* is the average of the solar zenith angle *αₙ* adopted by the sun during said time interval T;
*k*1 is a constant between 2 and 4, and
*k*2 is a constant between 0 and 1.

The solar zenith angle is the zenith angle of the sun, for example, the angle between the direct rays of the sun and the vertical direction over the ground.

The estimation of the diffuse horizontal irradiance *DHIₐₚₓ* is determined based on the following expression: ${DHI}_{apx} = {G}_{m} ∗ {{K}_{3}}^{- \left({G}_{m}∗{k}_{4}\right)}$ wherein:
*Gₘ* is the average of the values of global horizontal irradiance *GHI* measured during said time interval T;
*k*3 is a constant between 2 and 4, and
*k*4 is a constant between 0 and 1.

For example, the average *Gₘ* may be determined according to the following expression: ${G}_{m} = \frac{{\sum }_{1}^{n} {GHI}_{n}}{n}$ wherein:
*n* is the number of times the global horizontal irradiance *GHI* is measured during the time interval T.

For example, the average *αₘ* may be determined according to the following expression: ${α}_{m} = \frac{{\sum }_{1}^{n} {α}_{n}}{n}$ wherein:
*n* is the number of times the global horizontal irradiance *GHI* is measured during the time interval T; and
*αₙ* is the solar zenith angle at each time n during the time interval T.

Preferably, the method further comprises:
- obtaining a ratio *RTD* when comparing the diffuse horizontal irradiance *DHIₐₚₓ* with the global tilted irradiance *GTIₐₚₓ* according to the following expression: $RTD = \frac{{DHI}_{apx}}{{GTI}_{apx}}$ wherein:
   *DHIₐₚₓ* is the estimation of the diffuse horizontal irradiance during said time interval T; and
   *GTIₐₚₓ* is the estimation of the global tilted irradiance during said time interval T;
- comparing the ratio *RTD* with decision ranges, wherein each decision range correspond to a maximum tracking angle p, and
- obtaining a maximum tracking angle p based on said comparation, such that when the ratio *RTD* is bigger than 1, the rotation of the single horizontal axis 10 is limited to the maximum tracking angle p.

According to this, when the ratio *RTD* is bigger than 1, it means that the sky is at least partially cloudy and the photovoltaic panels 12 are not arranged in their normal tracking position but the rotation of the single horizon axis 10 is limited according to the maximum tracking angle p.

The decision ranges, and therefore maximum tracking angle p for each decision range are specially calculated to maximize energy obtained by the panels 12 in diffuse light conditions.

For example, when the ratio *RTD* is greater than 1 and less than or equal to 2, the rotation of the single horizontal axis 10 is limited to a maximum tracking angle p1 less than 35°. $1 < RTD < = 2 ; maximum tracking angle \pm 35 °$

For example, when the ratio *RTD* is greater than 2 and less than or equal to 3, the rotation of the single horizontal axis 10 is limited to a maximum tracking angle p2 less than 20°. $2 < RTD < = 3 ; maximum tracking angle \pm 20 °$

For example, when the ratio *RTD* is greater than 3 and less than or equal to 4 the rotation of the single horizontal axis 10 is limited to a maximum tracking angle p3 less than 10°. $3 < RTD < = 4 ; maximum tracking angle \pm 10 °$

For example, when the ratio *RTD* is greater than 4, the rotation of the single horizontal axis 10 is limited to a maximum tracking angle p4 less than 5°. $4 < RTD ; maximum tracking angle \pm 5 °$

For example, when the ratio *RTD* is less than 1, there is not a maximum tracking angle p established and the single horizontal axis 10 is rotated through the various tracking angles *βₙ* for positioning the photovoltaic panels 12 at the different normal tracking positions. $0 < RTD < = 1 ; tracking angle {β}_{n}$

The method may be repeated continuously during the day between rise and descent of the sun from east to west and several time intervals T may be established during the day. Preferably, a time interval T have at least 30 minutes.

Preferably, the radiation detecting sensor 2 is a pyranometer horizontally arranged in the vicinity of the solar tracker 1 to just measure values of global horizontal irradiance *GHI* of the sun in said location. For example, a SR05-D1A3 pyranometer of Hukseflux company.

Figure 4 shows an example of system for carrying out the method for positioning a single-axis solar tracker 1 during overcast periods. The system comprises a single-axis solar tracker 1 and a radiation detecting sensor 2 as described above, and a control unit NCU for carrying out the method described above.

The control unit NCU receive values of global horizontal irradiance *GHI* measured by the radiation detecting sensor 2 during a time interval T and values of tracking angles *βₙ* adopted by the single horizontal axis 10 during said time interval T, and determines based on said values an estimation of diffuse horizontal irradiance *DHIₐₚₓ* and an estimation a global tilted irradiance *GTIₐₚₓ* during said time interval T, and compares both estimations to obtain a maximum tracking angle p, such that when the diffuse horizontal irradiance *DHIₐₚₓ* is bigger than the global tilted irradiance *GTIₐₚₓ,* the rotation of the single horizontal axis 10 is limited to the maximum tracking angle p.

When the diffuse horizontal irradiance *DHIₐₚₓ* is bigger than the global tilted irradiance *GTIₐₚₓ,* the maximum tracking angle p obtained is sent to a tracker control unit TCU of the single axis solar tracker 1 which generates a signal S to actuate the motor of the drive mechanism 11 for rotating the single horizontal axis 10 until reaching the maximum tracking angle p and when the global tilted irradiance *GTIₐₚₓ* is bigger than the diffuse horizontal irradiance *DHIₐₚₓ,* the tracker control unit TCU generates a signal S to actuate the motor of the drive mechanism 11 for rotating the single horizontal axis 10 through the various tracking angles *βₙ* for positioning the photovoltaic panels 12 at the different normal tracking positions.

The control unit NCU may comprises a microcontroller to calculate the diffuse horizontal irradiance *DHIₐₚₓ* and the global tilted irradiance *GTIₐₚₓ* based on the values of global horizontal irradiance *GHI* and the values of solar zenith angle *αₙ* and using the simple mathematical expressions described above.

For example, the control unit NCU may having an algorithm for calculating the solar zenith angle αₙ based on data such as a GPS position of the solar tracker 1 and UTC date and time.

The tracker control unit TCU may also comprise a microcontroller comprising the tracking algorithm having the plurality of normal tracking positions according to the tracking angles *βₙ* for following the sun during the day, so the commands from the control unit NCU prevails to limit the rotation of the single horizontal axis 10 in diffuse conditions.

The control units NCU and TCU may comprise a controller, processor, microcontroller, FPGA or any other computationally capable device.

Figures 5a and 5b show graphs of the tracking angle *βₙ* taken by the photovoltaic panels 12 of the single-axis solar tracker 1 during a sunny day with cloudy periods and during a cloudy day respectively. In said figures, dotted line represents normal rotation of the single horizontal axis 10 to track the sun positioning the photovoltaic panels at normal tracking position while continuous line represents rotation of the single horizontal axis 10 according to the proposed invention limiting the rotation of the axis 10 during overcast periods. As can be observed, during sunny periods the two lines overlaps but during overcast periods the rotation of the axis is limited. In Figure 5b, where there are more cloudy periods, the movement of the panels is less than in Figure 5a where there are fewer cloudy periods, thus the method allows reducing the energy used to move the solar tracker and maximizing its efficiency.

## Claims

1. Method for positioning a single-axis solar tracker during overcast periods, wherein the single axis solar tracker (1) includes a single horizontal axis (10) operatively coupled to a drive mechanism (11) and a plurality of photovoltaic panels (12) arranged onto the single horizontal axis (10), the single horizontal axis (10) being rotatable through various tracking angles (*βₙ*) for positioning the photovoltaic panels (12) at different normal tracking positions to follow the sun during the day between rise and descent of the sun from east to west; **characterised in that** the method comprises:
- using a radiation detecting sensor (2) in the vicinity of the single-axis solar tracker (1) to measure values of global horizontal irradiance *(GHI)* of the sun in the location of the single-axis solar tracker (1) during a time interval (T);
- determining, based on the values of global horizontal irradiance *(GHI)* measured with the radiation detecting sensor (2), an estimation of a diffuse horizontal irradiance (*DHIₐₚₓ*) representative of diffuse irradiance incident on the location of the single-axis solar tracker (1) during said time interval (T);
- determining, based on the values of global horizontal irradiance *(GHI)* measured with the radiation detecting sensor (2), an estimation of a global tilted irradiance (*GTIₐₚₓ*) representative of global irradiance incident onto the photovoltaic panels (12) during said time interval (T);
- comparing the diffuse horizontal irradiance (*DHIₐₚₓ*) with the global tilted irradiance (*GTIₐₚₓ*); and
- obtaining a maximum tracking angle (p) based on said comparation, such that when the diffuse horizontal irradiance (*DHIₐₚₓ*) is bigger than the global tilted irradiance (*GTIₐₚₓ*)*,* the rotation of the single horizontal axis (10) is limited to the maximum tracking angle (p).

2. Method according to claim 1, wherein the estimation of the global tilted irradiance (*GTIₐₚₓ*) is determined based on the following expression: ${GTI}_{apx} = {G}_{m} ∗ \frac{1 - {{K}_{1}}^{- \left({G}_{m}∗{k}_{2}\right)}}{cos \left({α}_{m}\right)}$ wherein:
*Gₘ* is the average of the values of global horizontal irradiance *(GHI)* measured during said time interval (T);
*αₘ* is the average of the solar zenith angle (*αₙ*) adopted by the sun during said time interval (T);
*k*1 is a constant between 2 and 4, and
k2 is a constant between 0 and 1.

3. Method according to claim 1 or 2, wherein the estimation of the diffuse horizontal irradiance (*DHIₐₚₓ*) is determined based on the following expression: ${DHI}_{apx} = {G}_{m} ∗ {{K}_{3}}^{- \left({G}_{m}∗{k}_{4}\right)}$ wherein:
*Gₘ* is the average of the values of global horizontal irradiance *(GHI)* measured during said time interval (T);
k3 is a constant between 2 and 4, and
k4 is a constant between 0 and 1.

4. Method according to any of the preceding claims, wherein the method further comprises:
- obtaining a ratio *(RTD)* when comparing the diffuse horizontal irradiance (*DHIₐₚₓ*) with the global tilted irradiance (*GTIₐₚₓ*) according to the following expression: $RTD = \frac{{DHI}_{apx}}{{GTI}_{apx}}$
- comparing the ratio *(RTD)* with decision ranges, wherein each decision range correspond to a maximum tracking angle (p), and
- obtaining a maximum tracking angle (p) based on said comparation, such that when the ratio *(RTD)* is bigger than 1, the rotation of the single horizontal axis (10) is limited to the maximum tracking angle (p).

5. Method according to the preceding claim, wherein:
when the ratio (*RTD*) is greater than 1 and less than or equal to 2, the rotation of the single horizontal axis (10) is limited to a maximum tracking angle (p1) less than 35°,
when the ratio (*RTD*) is greater than 2 and less than or equal to 3, the rotation of the single horizontal axis (10) is limited to a maximum tracking angle (p2) less than 20°,
when the ratio (*RTD*) is greater than 3 and less than or equal to 4 the rotation of the single horizontal axis (10) is limited to a maximum tracking angle (p3) less than 10°,
when the ratio (*RTD*) is greater than 4, the rotation of the single horizontal axis (10) is limited to a maximum tracking angle (p4) less than 5°, and
when the ratio (*RTD*) is less than 1, there is not a maximum tracking angle (p) established and the single horizontal axis (10) is rotated through the various tracking angles (*βₙ*) for positioning the photovoltaic panels (12) at the different normal tracking positions.

6. Method according to any of the preceding claims, wherein when the rotation of the single horizontal axis (10) is limited to the maximum tracking angle (p), the single horizontal axis (10) is rotated through the various tracking angles (*βₙ*) until reaching the maximum tracking angle (p).

7. Method according to any of the preceding claims, wherein the time interval (T) is at least 30 minutes.

8. Method according to any of the preceding claims, wherein the radiation detecting sensor (2) is a pyranometer horizontally arranged in the vicinity of the solar tracker (1) to just measure values of global horizontal irradiance (*GHI*) of the sun in said location.

## Patentansprüche

1. Verfahren zum Positionieren eines einachsigen Sonnenfolgers während bewölkter Zeiträume, wobei der einachsige Sonnenfolger (1) eine einzige horizontale Achse (10), die betriebsmäßig mit einem Antriebsmechanismus (11) gekoppelt ist, und eine Vielzahl von photovoltaischen Paneelen (12) enthält, die auf der einzigen horizontalen Achse (10) angeordnet sind, wobei die einzige horizontale Achse (10) um verschiedene Nachführwinkel (*βₙ*) drehbar ist, um die photovoltaischen Paneele (12) in unterschiedliche normale Nachführpositionen zu positionieren, um der Sonne im Laufe des Tages zwischen Sonnenaufgang und -untergang von Osten nach Westen zu folgen; **dadurch gekennzeichnet, dass** das Verfahren folgendes umfasst:
- Verwenden eines Strahlungserkennungssensors (2) in der Nähe des einachsigen Sonnenfolgers (1) zum Messen der Werte der globalen horizontalen Einstrahlung (*GHI*) der Sonne am Standort des einachsigen Sonnenfolgers (1) während eines Zeitintervalls (T);
- Bestimmen, basierend auf den Werten der globalen horizontalen Einstrahlung (*GHI*), die mit dem Strahlungserkennungssensor (2) gemessen wurden, einer Schätzung einer diffusen horizontalen Einstrahlung (*DHIₐₚₓ*), die für die diffuse Einstrahlung repräsentativ ist, die während des Zeitintervalls (T) auf den Standort des einachsigen Sonnenfolgers (1) fällt;
- Bestimmen, basierend auf den Werten der globalen horizontalen Einstrahlung (*GHI*), die mit dem Strahlungserkennungssensor (2) gemessen wurden, einer Schätzung der globalen geneigten Einstrahlung (*GTIₐₚₓ*), die repräsentativ für die globale Einstrahlung ist, die während des genannten Zeitintervalls (T) auf die photovoltaischen Paneele (12) fällt;
- Vergleichen der diffusen horizontalen Einstrahlung (*DHIₐₚₓ*) mit der globalen geneigten Einstrahlung (*GTIₐₚₓ*); und
- Erhalten eines maximalen Nachführwinkels (p) basierend auf dem Vergleich, sodass, wenn die diffuse horizontale Einstrahlung (*DHIₐₚₓ*) größer ist als die globale geneigte Einstrahlung (*GTIₐₚₓ*), die Drehung der einzigen horizontalen Achse (10) auf den maximalen Nachführwinkel (p) eingeschränkt ist.

2. Verfahren nach Anspruch 1, wobei die Schätzung der globalen geneigten Einstrahlung (*GTIₐₚₓ*) basierend auf dem folgenden Ausdruck bestimmt wird: ${GTI}_{apx} = {G}_{m} ∗ \frac{1 - {{K}_{1}}^{- \left({G}_{m}∗{k}_{2}\right)}}{cos \left({α}_{m}\right)}$ wobei:
*Gₘ* der Mittelwert der Werte der globalen horizontalen Einstrahlung (*GHI*) ist, die während des Zeitintervalls (T) gemessen wurden;
*αₘ* der Mittelwert des Sonnenzenitwinkels (αn) ist, den die Sonne während des Zeitintervalls (T) einnimmt;
*k*1 eine Konstante zwischen 2 und 4 ist, und
*k*2 eine Konstante zwischen 0 und 1 ist.

3. Verfahren nach Anspruch 1 oder 2, wobei die Schätzung der diffusen horizontalen Einstrahlung (*DHIₐₚₓ*) basierend auf dem folgenden Ausdruck bestimmt wird: ${DHI}_{apx} = {G}_{m} ∗ {{K}_{3}}^{- \left({G}_{m}∗{k}_{4}\right)}$ wobei:
*Gₘ* der Mittelwert der Werte der globalen horizontalen Einstrahlung (*GHI*) ist, die während des Zeitintervalls (T) gemessen wurden;
*k*3 eine Konstante zwischen 2 und 4 ist, und
*k*4 eine Konstante zwischen 0 und 1 ist.

4. Verfahren nach einem der vorhergehenden Ansprüche, wobei das Verfahren ferner Folgendes umfasst:
- Erhalten eines Verhältnisses (*RTD*) beim Vergleich der diffusen horizontalen Einstrahlung (*DHIₐₚₓ*) mit der globalen geneigten Einstrahlung (*GTIₐₚₓ*) nach dem folgenden Ausdruck: $RTD = \frac{{DHI}_{apx}}{{GTI}_{apx}}$
- Vergleichen des Verhältnisses (*RTD*) mit Entscheidungsbereichen, wobei jeder Entscheidungsbereich einem maximalen Nachführwinkel (p) entspricht, und
- Erhalten eines maximalen Nachführwinkels (p) basierend auf dem Vergleich, sodass, wenn das Verhältnis (*RTD*) größer als 1 ist, die Drehung der einzigen horizontalen Achse (10) auf den maximalen Nachführwinkel (p) eingeschränkt ist.

5. Verfahren nach dem vorhergehenden Anspruch, wobei:
wenn das Verhältnis (*RTD*) größer als 1 und kleiner oder gleich 2 ist, die Drehung der einzigen horizontalen Achse (10) auf einen maximalen Nachführwinkel (p1) von weniger als 35° eingeschränkt ist,
wenn das Verhältnis (*RTD*) größer als 2 und kleiner oder gleich 3 ist, die Drehung der einzigen horizontalen Achse (10) auf einen maximalen Nachführwinkel (p2) von weniger als 20° eingeschränkt ist,
wenn das Verhältnis (*RTD*) größer als 3 und kleiner oder gleich 4 ist, die Drehung der einzigen horizontalen Achse (10) auf einen maximalen Nachführwinkel (p3) von weniger als 10° eingeschränkt ist,
wenn das Verhältnis (*RTD*) größer als 4 ist, die Drehung der einzigen horizontalen Achse (10) auf einen maximalen Nachführwinkel (p4) von weniger als 5° eingeschränkt ist, und
wenn das Verhältnis (*RTD*) kleiner als 1 ist, kein maximaler Nachführwinkel (p) festgelegt ist und die einzige horizontale Achse (10) um die verschiedenen Nachführwinkel (*βₙ*) gedreht wird, um die photovoltaischen Paneele (12) in die unterschiedlichen normalen Nachführpositionen zu positionieren.

6. Verfahren nach einem der vorhergehenden Ansprüche, wobei, wenn die Drehung der einzigen horizontalen Achse (10) auf den maximalen Nachführwinkel (p) eingeschränkt ist, die einzige horizontale Achse (10) um die verschiedenen Nachführwinkel (*βₙ*) gedreht wird, bis der maximale Nachführwinkel (p) erreicht ist.

7. Verfahren nach einem der vorhergehenden Ansprüche, wobei das Zeitintervall (T) mindestens 30 Minuten beträgt.

8. Verfahren nach einem der vorhergehenden Ansprüche, wobei der Strahlungserkennungssensor (2) ein Pyranometer ist, das horizontal in der Nähe des Sonnenfolgers (1) angeordnet ist, um ausschließlich Werte der globalen horizontalen Einstrahlung (*GHI*) der Sonne an diesem Standort zu messen.

## Revendications

1. Procédé de positionnement d'un suiveur solaire à axe unique pendant des périodes de ciel couvert, dans lequel le suiveur solaire à axe unique (1) comprend un axe horizontal unique (10) couplé fonctionnellement à un mécanisme d'entraînement (11) et une pluralité de panneaux photovoltaïques (12) disposés sur l'axe horizontal unique (10), l'axe horizontal unique (10) pouvant tourner selon différents angles de suivi (*βₙ*) pour positionner les panneaux photovoltaïques (12) dans différentes positions normales de suivi afin de suivre le soleil pendant la journée entre le lever et le coucher du soleil, d'est en ouest; **caractérisé en ce que** le procédé comprend:
- utiliser un capteur de détection de rayonnement (2) à proximité du suiveur solaire à axe unique (1) pour mesurer des valeurs d'irradiance horizontale globale (*GHI*) du soleil à l'emplacement du suiveur solaire à axe unique (1) pendant un intervalle de temps (T);
- déterminer, sur la base des valeurs d'irradiance horizontale globale (*GHI*) mesurées avec le capteur de détection de rayonnement (2), une estimation d'une irradiance horizontale diffuse (*DHIₐₚₓ*) représentative de l'irradiance diffuse incidente à l'emplacement du suiveur solaire à axe unique (1) pendant ledit intervalle de temps (T);
- déterminer, sur la base des valeurs d'irradiance horizontale globale (*GHI*) mesurées avec le capteur de détection de rayonnement (2), une estimation d'une irradiance globale sur plan incliné (*GTIₐₚₓ*) représentative de l'irradiance globale incidente sur les panneaux photovoltaïques (12) pendant ledit intervalle de temps (T);
- comparer l'irradiance horizontale diffuse (*DHIₐₚₓ*) à l'irradiance globale sur plan incliné (*GTIₐₚₓ*); et
- obtenir un angle de suivi maximal (p) sur la base de ladite comparaison, de sorte que, lorsque l'irradiance horizontale diffuse (*DHIₐₚₓ*) est supérieure à l'irradiance globale sur plan incliné (*GTIₐₚₓ*), la rotation de l'axe horizontal unique (10) soit limitée à l'angle de suivi maximal (p).

2. Procédé selon la revendication 1, dans lequel l'estimation de l'irradiance globale sur plan incliné (*GTIₐₚₓ*) est déterminée sur la base de l'expression suivante: ${GTI}_{apx} = {G}_{m} ∗ \frac{1 - {{K}_{1}}^{- \left({G}_{m}∗{k}_{2}\right)}}{cos \left({α}_{m}\right)}$ dans laquelle:
*Gₘ* est la moyenne des valeurs d'irradiance horizontale globale (*GHI*) mesurées pendant ledit intervalle de temps (T);
*αₘ* est la moyenne de l'angle zénithal solaire (*αₙ*) adopté par le soleil pendant ledit intervalle de temps (T);
*k*1 est une constante comprise entre 2 et 4, et
*k*2 est une constante comprise entre 0 et 1.

3. Procédé selon la revendication 1 ou 2, dans lequel l'estimation de l'irradiance horizontale diffuse (*DHIₐₚₓ*) est déterminée sur la base de l'expression suivante: ${DHI}_{apx} = {G}_{m} ∗ {{K}_{3}}^{- \left({G}_{m}∗{k}_{4}\right)}$ dans laquelle:
*Gₘ* est la moyenne des valeurs d'irradiance horizontale globale (*GHI*) mesurées pendant ledit intervalle de temps (T);
*k*3 est une constante comprise entre 2 et 4, et
*k*4 est une constante comprise entre 0 et 1.

4. Procédé selon l'une quelconque des revendications précédentes, dans lequel le procédé comprend en outre:
- obtenir un rapport (*RTD*) lors de la comparaison de l'irradiance horizontale diffuse (*DHIₐₚₓ*) à l'irradiance globale sur plan incliné (*GTIₐₚₓ*) selon l'expression suivante: $RTD = \frac{{DHI}_{apx}}{{GTI}_{apx}}$
- comparer le rapport (*RTD*) à des plages de décision, chaque plage de décision correspondant à un angle de suivi maximal (p), et
- obtenir un angle de suivi maximal (p) sur la base de ladite comparaison, de sorte que, lorsque le rapport (*RTD*) est supérieur à 1, la rotation de l'axe horizontal unique (10) soit limitée à l'angle de suivi maximal (p).

5. Procédé selon la revendication précédente, dans lequel:
lorsque le rapport (*RTD*) est supérieur à 1 et inférieur ou égal à 2, la rotation de l'axe horizontal unique (10) est limitée à un angle de suivi maximal (p1) inférieur à 35°,
lorsque le rapport (*RTD*) est supérieur à 2 et inférieur ou égal à 3, la rotation de l'axe horizontal unique (10) est limitée à un angle de suivi maximal (p2) inférieur à 20°,
lorsque le rapport (*RTD*) est supérieur à 3 et inférieur ou égal à 4 la rotation de l'axe horizontal unique (10) est limitée à un angle de suivi maximal (p3) inférieur à 10°,
lorsque le rapport (*RTD*) est supérieur à 4, la rotation de l'axe horizontal unique (10) est limitée à un angle de suivi maximal (p4) inférieur à 5°, et
lorsque le rapport (*RTD*) est inférieur à 1, aucun angle de suivi maximal (p) n'est établi et l'axe horizontal unique (10) est entraîné en rotation selon les différents angles de suivi (*βₙ*) pour positionner les panneaux photovoltaïques (12) dans les différentes positions normales de suivi.

6. Procédé selon l'une quelconque des revendications précédentes, dans lequel, lorsque la rotation de l'axe horizontal unique (10) est limitée à l'angle de suivi maximal (p), l'axe horizontal unique (10) est entraîné en rotation selon les différents angles de suivi (βn) jusqu'à atteindre l'angle de suivi maximal (p).

7. Procédé selon l'une quelconque des revendications précédentes, dans lequel l'intervalle de temps (T) est d'au moins 30 minutes.

8. Procédé selon l'une quelconque des revendications précédentes, dans lequel le capteur de détection de rayonnement (2) est un pyranomètre disposé horizontalement à proximité du suiveur solaire (1) pour mesurer uniquement des valeurs d'irradiance horizontale globale (*GHI*) du soleil audit emplacement.
